# EUROPEAN PATENT APPLICATION

(11) **EP 4 790 038 A1**
(43) Date of publication of application: **12.08.2026**
(21) Application number: 26156670.7
(22) Date of filing: 05.02.2026
(51) Int. Cl.: C04B 35/16, C04B 35/22, C04B 35/653, C04B 35/80

(54) **MULTIPHASE CERAMIC MATRIX COMPOSITE**

(30) Priority: 06.02.2025 US 202519046667
(71) Applicant: RTX Corporation, Farmington, CT 06032 (US)
(72) Inventor: JACKSON III, Richard Wesley, Mystic, 06355 (US); SUDRE, Olivier H., South Glastonbury, 06073 (US); JONSSON, Nils Eric, South Windsor, 06074 (US)
(74) Representative: Dehns

(57) **Abstract**

A method is provided for preparing a ceramic matrix composite (CMC) having a matrix with a SiC matrix phase and an oxide matrix phase. In one process embodiment, a CMC preform containing fiber tows is subjected to chemical vapor infiltration of SiC to form a SiC matrix phase. The resultant preform is then subjected to slurry infiltration to introduce ceramic particles, e.g., rare earth oxides [e.g., RE₂O₃, REO, REO₂], rare earth silicates [RE silicates], Ca silicate, and/or silicon carbide (SiC) particles, to fill void spaces in the preform. The CMC preform is then subjected to glass melt infiltration fore forming an oxide phase of the matrix. The melt infiltrated CMC preform is subjected to one or more heat treatments to form a crystalline oxide matrix phase.

## Description

### FIELD OF THE INVENTION

The present disclosure relates generally to methods for manufacturing ceramic matrix composites (CMCs). In particular, the present disclosure concerns manufacturing CMC components with multiple phases.

### BACKGROUND OF THE INVENTION

Gas turbine engines, in general, include a fan section, a compressor section, a combustion chamber, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and drive the compressor and fan sections.

Certain components of gas turbine engines are thus exposed to the high-energy, high temperature gas flow (flow path components). Therefore, it desirable that such components be made of materials with high heat resistance such as ceramic matrix composites (CMCs). CMC components can withstand much higher operating temperatures (e.g., greater than 1400°C) than components composed of superalloys.

CMCs comprise a ceramic matrix material in which ceramic fibers or fiber tows are embedded as reinforcing materials. To produce CMCs, a preform, made from woven fiber tows (e.g., made from SiC, C, Si₃,N₄, or SiO₂ fibers) held together by a binder can be initially prepared. The preform can then be infiltrated with a particulate ceramic matrix precursor material followed by melt infiltration of a reactant to react with the precursor material to form the matrix material that surrounds the fiber tows.

To modify the properties of a matrix material, attempts have been made to combine the carbide matrix phase with an oxide phase by hybrid processing techniques involving the use of different precursors and melt reactants. Such hybrid processing to produce a matrix containing both a carbide phase and an oxide phase can yield CMC materials with lower porosity and enhanced overall thermal, chemical and physical properties of the CMC material. Additionally, hybrid processing can reduce the time need to make the CMC component.

There is a continuing need for alternative and/or improved manufacturing methods for producing CMC materials, particularly for producing CMC materials used in components that will be exposed to high temperature gas flow, such as CMCs with a matrix having carbide and oxide phases, in order to further enhance the thermal, chemical and/or physical properties of the CMC material.

### SUMMARY OF THE INVENTION

In general, the present disclosure relates to methods for preparing CMC materials with multiphase matrices, as well as products produced by such methods. In particular, the present disclosure relates to methods for preparing CMC materials, and products produced thereby, having a carbide matrix phase and an oxide matrix phase.

The present disclosure is directed, in a first aspect, to a ceramic matrix composite (CMC) material comprising:
ceramic fiber tows, optionally provided with an interface coating, within a ceramic matrix; and
wherein the ceramic matrix contains at least one of the following phases: (Ca,RE)₄RE₆(SiO₄)₆O₂ (apatite), (Ca,RE)₂SiO₄ (olivine), Ca₂RE₂Si₂O₉ (cuspidine), and Ca₃RE₂Si₃O₁₂ (silicocarnotite), and optionally contains SiC, and
wherein RE is one or more of La, Ce, Pr, Nd, Pm, Sm, Eu, Gd, Tb, Dy, Ho, Er, Tm, Yb, Lu, Sc, or Y.

The present disclosure is also directed, in a further aspect, to a method of preparing a ceramic matrix composite comprising:
providing a ceramic matrix composite preform comprising a preform substrate having ceramic fiber tows, optionally provided with an interface coating, and a SiC matrix, the ceramic matrix composite preform having pores;
introducing a slurry into the pores of the ceramic matrix composite preform, the slurry containing rare earth oxide(s) [RE oxide(s), e.g., RE₂O₃, REO, REO₂], rare earth silicate(s) [RE silicate(s)], Ca silicate, and/or silicon carbide (SiC) particles and a carrier;
subjecting the ceramic matrix composite preform containing rare earth oxide(s) [RE oxide], rare earth silicate(s) [RE silicate(s)], Ca silicate, and/or silicon carbide (SiC) particles to glass melt infiltration at a temperature of 1350°C to 1500°C wherein the glass contains CaO, RE oxide [e.g., RE₂O₃, REO, REO₂] and SiO₂, wherein RE is La, Ce, Pr, Nd, Pm, Sm, Eu, Gd, Tb, Dy, Ho, Er, Tm, Yb, Lu, Sc, or Y; and
subjecting the glass infiltrated ceramic matrix composite preform to heat treatment at a temperature of 1150°C to 1400°C to cause crystallization of the ceramic matrix and formation of the ceramic matrix composite containing ceramic fiber tows, a SiC matrix, and an oxide matrix.

The present disclosure is further directed, in an additional aspect, to a CMC jet engine component having a matrix with a carbide matrix phase and an oxide matrix phase, prepared by a process comprising:
providing a ceramic matrix composite preform comprising a preform substrate having ceramic fiber tows, optionally provided with an interface coating, and a SiC matrix, the ceramic matrix composite preform having pores;
introducing a slurry into the pores of the ceramic matrix composite preform, the slurry containing rare earth oxide(s) [RE oxide(s), e.g., RE₂O₃, REO, REO₂], rare earth silicate(s) [RE silicate(s)], Ca silicate, and/or silicon carbide (SiC) particles and a carrier;
subjecting the ceramic matrix composite preform containing rare earth oxide(s) [RE oxide(s)], rare earth silicates [RE silicates], Ca silicate, and/or silicon carbide (SiC) particles to glass melt infiltration at a temperature of 1350°C to 1500°C wherein the glass contains CaO, RE oxide, [e.g., RE₂O₃, REO, REO₂] and SiO₂, wherein RE is La, Ce, Pr, Nd, Pm, Sm, Eu, Gd, Tb, Dy, Ho, Er, Tm, Yb, Lu, Sc, or Y; and
subjecting the glass infiltrated ceramic matrix composite preform to heat treatment at a temperature of 1150°C to 1400°C to cause crystallization of the ceramic matrix and formation of the ceramic matrix composite containing ceramic fiber tows, a SiC matrix, and an oxide matrix.

In further examples of the present disclosure, including further examples of the above, the ceramic fiber tows are SiC fiber tows.

In further examples of the present disclosure, including further examples of the above, the ceramic matrix composite material contains 20 - 50 vol.% of the ceramic fiber tows.

In further examples of the present disclosure, including further examples of the above, the ceramic matrix contains at least one of the following phases: (Ca,RE)₄RE₆(SiO₄)₆O₂ (apatite), (Ca,RE)₂SiO₄ (olivine), Ca₂RE₂Si₂O₉ (cuspidine), Ca₃RE₂Si₃O₁₂ (silicocarnotite), e.g., (Ca,RE)₄RE₆(SiO₄)₆O₂ (apatite), and SiC.

In further examples of the present disclosure, including further examples of the above, the ceramic matrix contains two or three of the following phases: (Ca,RE)₄RE₆(SiO₄)₆O₂ (apatite), (Ca,RE)₂SiO₄ (olivine), Ca₂RE₂Si₂O₉ (cuspidine), Ca₃RE₂Si₃O₁₂ (silicocarnotite).

In further examples of the present disclosure, including further examples of the above, the ceramic matrix contains 10 - 30 vol.% of SiC matrix and 20 - 60 vol.% of an oxide matrix, wherein more than 75 vol.% of the oxide matrix is made up of (Ca,RE)₄RE₆(SiO₄)₆O₂ (apatite), (Ca,RE)₂SiO₄ (olivine), and/or Ca₂RE₂Si₂O₉ (cuspidine) phases.

In further examples of the present disclosure, including further examples of the above, the oxide matrix further contains particulate SiC.

In further examples of the present disclosure, including further examples of the above exemplary embodiments, the oxide matrix contains 5 - 15 vol.% particulate SiC.

In further examples of the present disclosure, including further examples of the above, the ceramic matrix contains SiC and two or three of the following phases: (Ca,Y)₄RE₆(SiO₄)₆O₂ (apatite), (Ca,Y)₂SiO₄ (olivine), Ca₂Y₂Si₂O₉ (cuspidine), Ca₃Y₂Si₃O₁₂ (silicocarnotite).

In further examples of the present disclosure, including further examples of the above, the ceramic matrix contains 10 - 30 vol.% of SiC matrix and 20 - 60 vol.% of an oxide matrix, wherein more than 75 vol.% of the oxide matrix is made up of (Ca,Y)₄RE₆(SiO₄)₆O₂ (apatite), (Ca,Y)₂SiO₄ (olivine), and/or Ca₂Y₂Si₂O₉ (cuspidine) phases.

In further examples of the present disclosure, including further examples of the above, the preform substrate having ceramic fiber tows and a SiC matrix is prepared by subjecting a preform substrate to chemical vapor infiltration to introduce a SiC matrix.

In further examples of the present disclosure, including further examples of the above, prior to introduction of the slurry the ceramic matrix composite preform has a porosity of 5- 50 vol.%, such as 10-50 vol.%.

In further examples of the present disclosure, including further examples of the above, the size of the particles of the slurry is 0.5 µm to 15 µm.

In further examples of the present disclosure, including further examples of the above, the slurry introduction is conducted at a temperature of 0°C to 25°C.

In further examples of the present disclosure, including further examples of the above, following crystallization, the ceramic matrix composite material contains 20 - 50 vol.% of the ceramic fiber tows, and the ceramic matrix contains 10 - 30 vol.% of the SiC matrix and 20 - 60 vol.% of the oxide matrix, wherein more than 75 vol.% of the oxide matrix is made up of (Ca,RE)₄RE₆(SiO₄)₆O₂ (apatite), (Ca,RE)₂SiO₄ (olivine), and/or Ca₂RE₂Si₂O₉ (cuspidine) phases.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
- Fig. 1: is a flow chart showing steps for preparation of a CMC material having a carbide matrix phase and an oxide matrix phase according to the present disclosure;
- Fig. 2: illustrates a cross section of CMC preform with a SiC matrix deposited by Chemical Vapor Infiltration;
- Fig. 3: illustrates a cross section of CMC preform with SiC matrix after slurry infiltration;
- Fig. 4: illustrates a cross section of a slurry infiltrated CMC preform after glass melt infiltration;
- Fig. 5: illustrates a cross section of a CMC preform after glass melt infiltration and subsequent crystallization.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by volume percent (vol. %.) based on a total volume of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

The present disclosure provides a method for producing a ceramic matrix composite material comprising ceramic fiber tows within a ceramic matrix, in which the ceramic matrix has a carbide phase (e.g., SiC) and an oxide phase wherein the oxide phase includes at least three of the following phases: (Ca,RE)₄RE₆(SiO₄)₆O₂ (apatite), (Ca,RE)₂SiO₄ (olivine), Ca₂RE₂Si₂O₉ (cuspidine), and Ca₃RE₂Si₃O₁₂ (silicocarnotite), and SiC, wherein RE is one or more of La, Ce, Pr, Nd, Pm, Sm, Eu, Gd, Tb, Dy, Ho, Er, Tm, Yb, Lu, Sc, or Y.

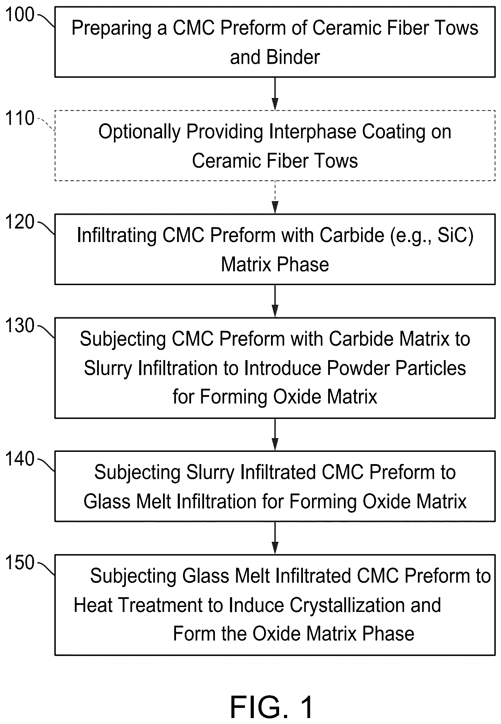

Fig. 1 is a process flow chart for preparing a CMC material having both a carbide (e.g., SiC) matrix phase and an oxide matrix phase. In the first step 100, a CMC preform is prepared. The preform serves as the initial framework for creating the CMC component. The preform contains ceramic fibers, or bundles of ceramic fibers called tows, held together with a binder. The fibers can take the form of layers of unidirectional fibers or can be in the form of woven fibers. For example, that fibers can be woven into a two-dimensional fabric sheets or plies and then stacked to form the preform. This is sometimes referred to as a laying up process. Alternatively, the preform can be in the form of a three-dimensional weave wherein, for example, a plurality of warp fibers are interwoven through a plurality of weft fiber layers.

Polymeric binders such as polyvinyl alcohol (PVA) or polyvinyl butyral (PVB) can be used to help hold the fibers/plies together to provide a certain rigidity to the preform. Following layup, the binder can be removed by heat treatment, during which the binder is burned or vaporized, or can be removed by solvent dissolution and washing.

The fibers/filaments used in the CMC preforms may be, for example, silicon carbide (SiC), zirconium carbide (ZrC), hafnium carbide (HfC), silicon nitride, carbon, mullite, aluminum oxide, or combinations thereof. In still further examples, the fibers are fully crystalline, partially crystalline, or predominantly amorphous or glassy. In one particular example, the fibers are SiC fibers.

In Step 110, after removal of the binder, the fibers of the preform can, optionally, be provided with one or several interphases deposited prior to introduction of matrix material. This interphase coating can be, for example, a coating of boron nitride, silicon-doped boron nitride, boron-doped carbon, boron carbide, titanium nitride, or zirconium nitride which is applied by chemical vapor infiltration (CVI). The interphase coating is used to ensure that the composite will exhibit non-brittle behavior to reduce crack formation and/or propagation.

The resultant preform exhibits a certain porosity. For example, the preform can be formed with fibers forming 20-50 vol.% of the overall preform volume, for example, 25-50 vol.%, 30-50 vol.%, 35-50 vol.%, 30-45 vol.%, or 35-45 vol.%. The substantial porosity of the preform will be utilized in forming the matrix during further processing.

Step 120 begins the process of forming the matrix of the composite by using, for example, CVI to introduce a carbide matrix, for example, a matrix made from silicon carbide, boron carbide, hafnium carbide, zirconium carbide, or combinations thereof. Alternatively, infiltration and pyrolysis of pre-ceramic polymers (PIP) or slurry infiltration of SiC and C and reaction with molten Si or Si alloys (melt infiltration) can be used for introducing a carbide matrix. In a particular embodiment, the carbide matrix is a SiC matrix. CVI involves introducing gaseous precursors into the porous CMC preform. These precursors react at the surface of the fibers (or the surface of the interphase if present), depositing material and filling the voids. In this embodiment of the inventive process, the introduced carbide material (e.g., SiC) only partially fills the voids/pores of the preform. For example, the carbide matrix can fill 5% to 55 vol.% (such as 10-50 vol.%, 20-40 vol. %, or 25-35 vol. %) of the available porosity. By way of another example, if before introduction of the carbide matrix the preform has a porosity of 50-70 vol.%, following deposition of the carbide matrix, the porosity can be, for example, 20 to 60 vol.% (such as 30 to 60 vol.%, 35 to 60 vol.% 35-50 vol.%, 40-55 vol. %, or 45-60 vol. %).

After deposition of the carbide matrix, additional processing can occur with respect to the matrix formation. Thus, referring again to Fig. 1, in step 130 the CMC preform with carbide matrix is subjected to slurry infiltration to introduce a powdered material into the preform. In this embodiment of the inventive process, the powdered material acts as one of the reactants used to form an oxide matrix in the preform. The slurry containing rare earth oxide(s) [e.g., RE₂O₃, REO, REO₂], rare earth silicate(s) [RE silicates], and/or Ca silicate particles and a carrier. Additionally, the slurry can contain SiC particles as filler particles which can be used to increase the thermal conductivity of the overall CMC system. During the slurry infiltration, the powders fill pores or void spaces within the CMC preform with carbide matrix. Slurry infiltration can be performed, for example, by applying vacuum to the preform during infiltration to facilitate the flow of the slurry into the pores of the preform, and then raising the pressure to atmospheric pressure or elevated pressure.

The particle size of the powders is selected to be of a size that will permit the particles to enter and be retained within the pores of the preform. For example, the particle size of the powders used in the slurry can be 0.5 µm to 15 µm, for example, 1 µm to 15 µm, 5 µm to 15 µm, 1 µm to 10 µm or 5 µm to 10 µm. The carrier fluid for the slurry can be a liquid that is relatively inert with respect to the materials of the preform to be infiltrated and that will facilitate penetration of the slurry into the pore/voids of the preform. Suitable carrier liquids include water or organic liquids such as isopropanol or methanol. The liquid carrier may also contain binders, surfactants, and/or dispersants to aid in forming a suspension of the powder in the slurry. The liquid may also be a colloidal suspension. The slurry infiltration can be carried out at, for example, 0°C to 25°C, such as 10°C to 25°C, 15 to 25°C or 20 to 25°C, or room temperature. After slurry infiltration, the carrier liquid can be removed (evaporated), for example, by heat treatment, or the slurry can be frozen and then dried to remove the carrier fluid (e.g., water) via sublimation.

Following slurry infiltration, the resultant slurry infiltrated preform is subjected to melt infiltration in step 140. In melt infiltration 140, a glass melt is introduced into the preform to react with the powder particles deposited by slurry infiltration and thereby initiate formation of the metal oxide matrix. The glass melt contains CaO, RE oxide [e.g., RE₂O₃, REO, REO₂] and SiO₂, used alone or in combination, wherein RE is La, Ce, Pr, Nd, Pm, Sm, Eu, Gd, Tb, Dy, Ho, Er, Tm, Yb, Lu, Sc, or Y. According to one embodiment, a combination of metal oxides is used as the glass melt, such as CaO, Y₂O₃, and SiO₂, or CaO, Yb₂O₃, and SiO₂, or CaO, Gd₂O₃, and SiO₂.

The glass melt composition can be, for example, 45 - 70 mol.% SiO₂, 25 - 45 mol.% CaO, and 2 - 20 mol.% REO_{1.5}, such as 50 - 60 mol.% SiO₂, 30 - 40 mol.% CaO, and 5 - 10 mol.% REO_{1.5} or 55 - 60 mol.% SiO₂, 30 - 40 mol.% CaO, and 5 - 10 mol.% REO_{1.5}.

Process conditions for melt infiltration include, for example, a temperature within a range of, for example, about 1300°C to 1600°C, such as 1300°C to 1550°C, 1350°C to 1485°C, 1350°C to 1500°C, or 1370°C -1420°C. The pressure can be a positive pressure or the process can be conducted under vacuum. The pressure can be, for example, between 0.001 mbar (0.1 Pa) and 10 bar (1 MPa).

After melt infiltration, in step 150 the melt infiltrated CMC preform is subjected to one or more heat treatments to react glass melt and particles(s) to form a crystalline oxide matrix phase and obtain a ceramic matrix composite having matrix that has a carbide matrix phase and an oxide matrix phase. The heat treatment(s) are performed at, for example, a temperature of 1150°C to 1400°C such as 1200°C to 1400°C or 1250°C to 1300°C, 1350°C to 140°C, or 1275°C to 1350°C.

The resultant ceramic matrix composite exhibits both a carbide matrix phase and an oxide matrix phase, i.e. a multiphase matrix, wherein the oxide phase exhibits at least one (e.g., one, two or three) of the following phases, i.e., (Ca,RE)₄RE₆(SiO₄)₆O₂ (apatite), (Ca,RE)₂SiO₄ (olivine), Ca₂RE₂Si₂O₉ (cuspidine), and/or Ca₃RE₂Si₃O₁₂ (silicocarnotite), and optionally contains SiC. Moreover, by controlling the conditions the slurry infiltration, glass melts infiltration, and crystallization (such as temperatures composition of slurry and concentration of slurry particles, composition of glass for glass melt infiltration, duration of heat treatment rate of crystal formation), the resultant volume fraction of individual phases of the oxide matrix can be controlled. By controlling the volume fractions of such phases, one can manipulate overall properties of the matrix of the CMC material such as thermal expansion (for example, to closely match the coefficient of thermal expansion of the matrix to that of the SiC fibers) and temperature stability (e.g., achieve a temperature stability of greater than 1400°C). Additionally, the use of slurry infiltration in combination with glass melt infiltration reduces void space in the CMC and thereby improves thermal conductivity.

For example, by controlling the crystallization conditions, the resultant ceramic matrix composite can contain 30 - 50 vol.% of the ceramic fiber tows (e.g. 30 - 50 vol.% of the SiC fiber tows) and a ceramic matrix that contains 10 - 30 vol.% of SiC matrix and 20 - 60 vol.% of an oxide matrix, wherein more than 75 vol.% of the oxide matrix is made up of three or more of the following oxide phases, i.e., (Ca,RE)₄RE₆(SiO₄)₆O₂ (apatite), (Ca,RE)₂SiO₄ (olivine), Ca₂RE₂Si₂O₉ (cuspidine), and/or Ca₃RE₂Si₃O₁₂ (silicocarnotite). In a further embodiment, more than 75 vol.% of the oxide matrix is made up of the following oxide phases: (Ca,RE)₄RE₆(SiO₄)₆O₂ (apatite), (Ca,RE)₂SiO₄ (olivine), and Ca₂RE₂Si₂O₉ (cuspidine). Further, the oxide matrix can also contain particulate SiC (e.g., 5 - 15 vol.% particulate SiC).

In a further embodiment, the ceramic matrix contains at least one (e.g., one, two, or three) of the following phases: (Ca,Y)₄RE₆(SiO₄)₆O₂ (apatite), (Ca,Y)₂SiO₄ (olivine), Ca₂Y₂Si₂O₉ (cuspidine), Ca₃Y₂Si₃O₁₂ (silicocarnotite). For example, the resultant ceramic matrix composite can contain 10 - 30 vol.% of SiC matrix and 20 - 60 vol.% of an oxide matrix, wherein more than 75 vol.% of the oxide matrix is made up of least three of the following phases: (Ca,Y)₄RE₆(SiO₄)₆O₂ (apatite), (Ca,Y)₂SiO₄ (olivine), Ca₂Y₂Si₂O₉ (cuspidine), Ca₃Y₂Si₃O₁₂ (silicocarnotite). In a further embodiment, more than 75 vol.% of the oxide matrix is made up of the following oxide phases: (Ca,Y)₄RE₆(SiO₄)₆O₂ (apatite), (Ca,Y)₂SiO₄ (olivine), and/or Ca₂Y₂Si₂O₉ (cuspidine) phases.

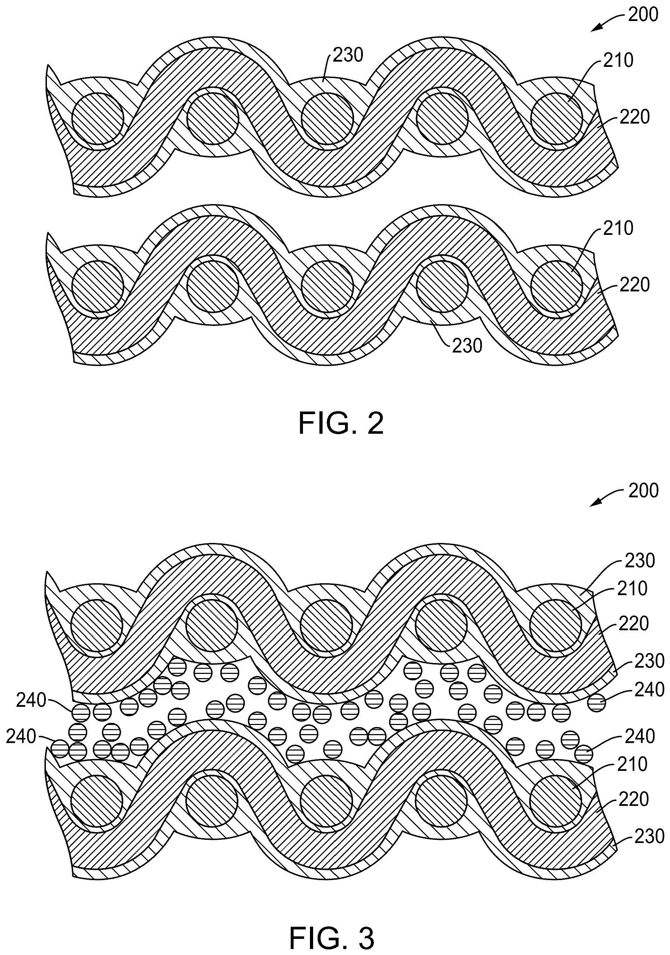

Figs. 2-5 illustrate cross sections of a preform at different points in the process. Fig. 2 shows a cross section of 2 plies of a CMC preform 200 that has been partially densified by CVI deposition of a SiC matrix. In this embodiment, the plies are shown as two-dimensional weaves of warp 210 and weft 220 fiber tows. The fibers 210/220 (which optionally have an interface coating) are coated with carbide matrix material 230 (SiC matrix material). See step 120 of the flowchart of Fig. 1. While the partially densified preform is shown as having voids/pores between the plies, it should be understood that pores/voids can also be present between the warp and weft fibers.

Fig. 3 shows the same cross section after slurry infiltration wherein the powder particles 240 are deposited within voids of the preform. For, example, 50% of the pore volume of the perform of Fig. 2 is filed with the slurry. See step 130 of the flowchart of Fig. 1.

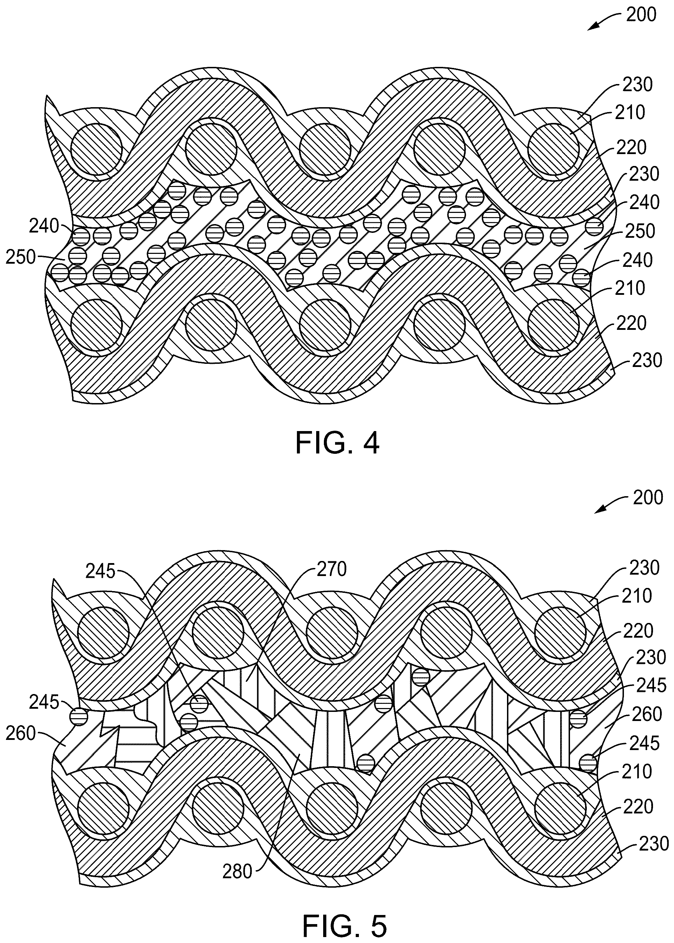

Fig. 4 shows the same cross section after glass melt infiltration. As can be seen in the Figure, pores within the preform contain both the slurry particles 240 and the molten glass 250. Fig. 5 shows the same cross section after crystallization, i.e., after the slurry particles and molten glass have reacted and the oxide phases have formed and stabilized. In this embodiment, three oxide phases are shown, e.g., (Ca,RE)₄RE₆(SiO₄)₆O₂ (apatite) 260, (Ca,RE)₂SiO₄ (olivine) 270, and Ca₂RE₂Si₂O₉ (cuspidine) 280. Also, as shown, the oxide matrix may contain SiC filler particles 245, introduced during slurry infiltration.

The present disclosure provides an efficient method for forming CMC materials with both a carbide phase and an oxide phase, and provides a process for obtaining an oxide phase exhibiting multiple phases and permitting the manipulation of the volume fraction in order to adjust properties of the matrix of the CMC material.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope the present disclosure.

## Claims

1. A ceramic matrix composite material comprising:
ceramic fiber tows (210; 220), optionally provided with an interface coating, within a ceramic matrix (230); and
wherein the ceramic matrix (230) contains at least one of the following phases: (Ca,RE)₄RE₆(SiO₄)₆O₂ (apatite) (260), (Ca,RE)₂SiO₄ (olivine) (270), Ca₂RE₂Si₂O₉ (cuspidine) (280), and Ca₃RE₂Si₃O₁₂ (silicocarnotite), and optionally contains SiC (245), and
wherein RE is one or more of La, Ce, Pr, Nd, Pm, Sm, Eu, Gd, Tb, Dy, Ho, Er, Tm, Yb, Lu, Sc, or Y.

2. The ceramic matrix composite material according to claim 1, wherein the ceramic fiber tows (210; 220) are SiC fiber tows (210; 220).

3. The ceramic matrix composite material according to claim 1 or 2, wherein the ceramic matrix composite material contains 20 - 50 vol.% of the ceramic fiber tows (210; 220).

4. The ceramic matrix composite material according to any preceding claim, wherein ceramic matrix (230) contains 10 - 30 vol.% of SiC matrix and 20 - 60 vol.% of an oxide matrix, wherein more than 75 vol.% of the oxide matrix is made up of (Ca,RE)₄RE₆(SiO₄)₆O₂ (apatite) (260), (Ca,RE)₂SiO₄ (olivine) (270), and/or Ca₂RE₂Si₂O₉ (cuspidine) (280) phases.

5. The ceramic matrix composite material according to any preceding claim, wherein the ceramic matrix (230) contains at least two of the following phases: (Ca,Y)₄RE₆(SiO₄)₆O₂ (apatite) (260), (Ca,Y)₂SiO₄ (olivine) (270), Ca₂Y₂Si₂O₉ (cuspidine) (280), and Ca₃Y₂Si₃O₁₂ (silicocarnotite).

6. The ceramic matrix composite material according to any of claims 1 to 4, wherein the ceramic matrix (230) contains at least two of the following phases: (Ca,Y)₄RE₆(SiO₄)₆O₂ (apatite) (260), (Ca,Y)₂SiO₄ (olivine) (270), Ca₂Y₂Si₂O₉ (cuspidine) (280), Ca₃Y₂Si₃O₁₂ (silicocarnotite), and SiC (245).

7. The ceramic matrix composite material according to any of claims 1 to 3, wherein the ceramic matrix (230) contains 10 - 30 vol.% of SiC matrix and 20 - 60 vol.% of an oxide matrix, wherein more than 75 vol.% of the oxide matrix is made up of (Ca,Y)₄RE₆(SiO₄)₆O₂ (apatite) (260), (Ca,Y)₂SiO₄ (olivine) (270), and/or Ca₂Y₂Si₂O₉ (cuspidine) (280) phases.

8. The ceramic matrix composite material according to claim 4 or 7 or claim 5 or 6 as dependent on claim 4 directly or indirectly, wherein the oxide matrix further contains particulate SiC (245), optionally 5 - 15 vol.% particulate SiC (245).

9. A method of preparing a ceramic matrix composite comprising:
providing a ceramic matrix composite preform (200) comprising a preform substrate having ceramic fiber tows (210; 220), optionally provided with an interface coating, and a SiC matrix, the ceramic matrix composite preform (200) having pores;
introducing a slurry into the pores of the ceramic matrix composite preform (200), the slurry containing rare earth oxides [RE oxide], rare earth silicate(s) [RE silicate(s)], Ca silicate, and/or silicon carbide (SiC) particles (245) and a carrier;
subjecting the ceramic matrix composite preform (200) containing rare earth oxide(s) [RE oxide], rare earth silicate(s) [RE silicate(s)], Ca silicate, and/or silicon carbide (SiC) particles to glass melt infiltration at a temperature of 1350°C to 1500°C wherein the glass (250) contains CaO, RE oxide, and SiO₂, wherein RE is La, Ce, Pr, Nd, Pm, Sm, Eu, Gd, Tb, Dy, Ho, Er, Tm, Yb, Lu, Sc, or Y; and
subjecting the glass infiltrated ceramic matrix composite preform (200) to heat treatment at a temperature of 1150°C to 1400°C to cause crystallization of the ceramic matrix (230) and formation of the ceramic matrix composite containing ceramic fiber tows (210; 220), a SiC matrix, and an oxide matrix.

10. The method according to claim 9, wherein the preform substrate having ceramic fiber tows (210; 220) and a SiC matrix is prepared by subjecting a preform substrate to chemical vapor infiltration to introduce a SiC matrix.

11. The method according to claim 9 or 10, wherein prior to introduction of the slurry the ceramic matrix composite preform (200) has a porosity of 5- 50 vol.%, optionally 10-50 vol.%.

12. The method according to any of claims 9 to 11, wherein the size of the particles of the slurry is 0.5 µm to 15 µm.

13. The method according to any of claims 9 to 12, wherein slurry introduction is conducted at a temperature of 0°C to 25°C.

14. The method according to any of claims 9 to 13, wherein, following crystallization, the ceramic matrix composite material contains 20 - 50 vol.% of the ceramic fiber tows (210; 220), and the ceramic matrix (230) contains 10 - 30 vol.% of the SiC matrix and 20 - 60 vol.% of the oxide matrix, wherein more than 75 vol.% of the oxide matrix is made up of (Ca,RE)₄RE₆(SiO₄)₆O₂ (apatite) (260), (Ca,RE)₂SiO₄ (olivine) (270), and/or Ca₂RE₂Si₂O₉ (cuspidine) (280) phases.

15. A CMC jet engine component having a matrix (230) with a carbide matrix phase and an oxide matrix phase, prepared by a process comprising:
providing a ceramic matrix composite preform (200) comprising a preform substrate having ceramic fiber tows (210; 220), optionally provided with an interface coating, and a SiC matrix, the ceramic matrix composite preform (200) having pores;
introducing a slurry into the pores of the ceramic matrix composite preform (200), the slurry containing rare earth oxide(s) [RE oxide], rare earth silicate(s) [RE silicate(s)], Ca silicate, and/or silicon carbide (SiC) particles (245) and a carrier;
subjecting the ceramic matrix composite preform (200) containing rare earth oxides [RE oxide], rare earth silicate(s) [RE silicate(s)], Ca silicate, and/or silicon carbide (SiC) particles to glass melt infiltration at a temperature of 1350°C to 1500°C wherein the glass (250) contains CaO, RE oxide, and SiO₂, wherein RE is La, Ce, Pr, Nd, Pm, Sm, Eu, Gd, Tb, Dy, Ho, Er, Tm, Yb, Lu, Sc, or Y; and
subjecting the glass infiltrated ceramic matrix composite preform (200) to heat treatment at a temperature of 1150°C to 1400°C to cause crystallization of the ceramic matrix (230) and formation of the ceramic matrix composite containing ceramic fiber tows (210; 220), a SiC matrix, and an oxide matrix.
